# EUROPÄISCHE PATENTANMELDUNG

(11) **EP 2 562 298 A2**
(43) Veröffentlichungstag der Anmeldung: **27.02.2013**
(21) Anmeldenummer: 12180217.7
(22) Anmeldetag: 13.08.2012
(51) Int. Cl.: D01H 4/08, D01H 4/12

(54) **Spurlager für einen Spinnrotor**

(30) Priorität: 26.08.2011 DE 102011053019
(71) Anmelder: MASCHINENFABRIK RIETER AG, 8406 Winterthur (CH)
(72) Erfinder: Burchert, Mathias, 73760 Ostfildern (DE); Lauer, Matthias, 73337 Unterböhringen (DE); Knabel, Manfred, 85055 Ingolstadt (DE)
(74) Vertreter: Bergmeier, Werner

(57) **Zusammenfassung**

Spurlager (6) für einen axial belasteten Schaft (8) eines Spinnrotors (3) mit einem Spurlagergehäuse (9), in dessen Innenraum (14) eine gegen eine Abstützfläche (11) anliegende, frei drehbare Stützkugel (10) zur Abstützung eines stirnseitigen Schaftendes (8a) des Spinnrotors (3) angeordnet ist, sowie mit einer der Abstützfläche (11) gegenüberliegend angeordneten Öffnung (12) für das Schaftende (8a), dadurch gekennzeichnet, dass die Abstützfläche (11) ortsfest in dem Spurlagergehäuse (9) angeordnet ist.

## Beschreibung

Die vorliegende Erfindung betrifft ein Spurlager für einen axial belasteten Schaft eines Spinnrotors mit einem Spurlagergehäuse, in dessen Innenraum eine gegen eine Abstützfläche anliegende, frei drehbare Stützkugel zur Abstützung eines stirnseitigen Schaftendes des Spinnrotors angeordnet ist, sowie mit einer der Abstützfläche gegenüberliegend angeordneten Öffnung für das Schaftende.

Bei bekannten Rotorspinnvorrichtungen ist der Spinnrotor radial in einem Keilspalt zweier Stützscheibenpaare gelagert, wobei die Stützscheibenpaare verschränkt zueinander angeordnet sind und hierdurch eine Axialkraft auf den Spinnrotor ausüben. Zur axialen Abstützung des Spinnrotors ist daher ein Spurlager vorgesehen.

Die DE 36 22 523 C2 zeigt ein derartiges Spurlager, bei welchem als Schmiermittel Schmieröl vorgesehen ist, welches in einem Behälter unterhalb der Kugel angeordnet ist. Über einen Docht, welcher einerseits in das Schmieröl eintaucht und andererseits mit der Kugel in Berührung steht, wird das Schmieröl der Stützkugel zugeführt. Bei dieser Ausführung eines Spurlagers kann es zu einem Austreten von Schmieröl, insbesondere im Bereich der Öffnung für den Rotorschaft kommen. Hierdurch kann es zu verschiedenen Problemen im Spinnbetrieb kommen, beispielsweise wenn ausgetretenes Schmiermittel in den Bereich der Stützscheiben gelangt. Auch führt ein Schmiermittelaustritt durch den bei Spinnmaschinen stets vorhandenen Faserflug zwangsläufig zu Verunreinigungen durch Faseranhaftungen, welche weitere Probleme im Spinnbetrieb nach sich ziehen.

Die DE 34 40 950 A1 zeigt demgegenüber ein Spurlager, bei welchem anstelle eines Ölbades Mittel vorgesehen sind, um der Kugel Schmierfett zuzuführen. Die Kugel ist hierbei direkt in einem ein Schmierfett enthaltenden Innenraum des Spurlagers angeordnet. Die axiale Positionierung des Spinnrotors erfolgt über eine Stellschraube, welche die Abstützfläche für die Stützkugel bildet. Der Spinnrotor taucht durch eine der Stellschraube mit der Abstützfläche gegenüberliegend angeordnete Öffnung in das Gehäuse mit dem Schmierfettreservoir ein. Um einen Schmiermittelaustritt zu vermeiden, ist in der Bohrung für den Rotorschaft eine Dichtung angeordnet, welche den Schaft des Spinnrotors nach Außen hin abdichtet. Dennoch kann es bei derartigen Spurlagern zu einem Austreten von Schmiermittel mit den entsprechenden negativen Folgen kommen.

Aufgabe der vorliegenden Erfindung ist es daher, ein Spurlager sowie eine Offenendspinnvorrichtung mit einem Spurlager vorzuschlagen, welches eine verbesserte Abdichtung ermöglicht.

Die Aufgabe wird gelöst mit den Merkmalen der unabhängigen Ansprüche.

Ein Spurlager für einen axial belasteten Schaft eines Spinnrotors weist ein Spurlagergehäuse, eine gegen eine Abstützfläche anliegende frei drehbare Stützkugel zur Abstützung eines stirnseitigen Schaftendes des Spinnrotors sowie eine der Abstützfläche gegenüberliegend angeordnete Öffnung für das Schaftende auf. Die Stützkugel ist in einem Innenraum des Spurlagers angeordnet. Eine Offenendspinnvorrichtung weist zur Lagerung eines Spinnrotors einen Lagerbock auf, an welchem ein Spurlager befestigt ist, an welchem wiederum ein Schaftende des Spinnrotors axial abgestützt ist. Erfindungsgemäß ist vorgesehen, dass die Abstützfläche ortsfest in dem Spurlagergehäuse angeordnet ist und das Spurlagergehäuse wenigstens eine ringförmige Dichtfläche im Bereich der Stützkugel aufweist, welche den Innenraum direkt an der Stützkugel gegen die Öffnung für das Rotorschaftende abdichtet. Die ortsfest angeordnete Abstützfläche bewirkt hierbei, dass die Lage der Stützkugel bzw. auch der Abstützfläche relativ zum Spurlagergehäuse sich stets an derselben Position befindet, so dass auch die Lage der Kugel relativ zu einer Dichtung des Spurlagergehäuses nach Außen hin stets konstant bleibt.

Bei einem fett- oder ölgeschmierten Spurlager kann hierdurch erreicht werden, dass lediglich die Stützkugel innerhalb des in dem Innenraum angeordneten Schmiermittelvorrat läuft, während das Schaftende des Spinnrotors sowie die Kontaktfläche zwischen dem stirnseitigen Schaftende und der Stützkugel außerhalb des durch die ringförmige Dichtfläche begrenzten Innenraums liegen. Hierdurch kann ein Heraustreten des Schmiermittels aus dem Innenraum durch den drehenden Spinnrotor vermieden werden. Weiterhin ist hierdurch eine sehr gezielte Schmiermittelzufuhr an die Kontaktfläche von Stützkugel und stirnseitigem Rotorschaftende möglich, welche nur mehr eine reduzierte Menge an Schmiermittel in dem Innenraum erfordert. Die Abdichtung des Spurlagergehäuses ist hierdurch verbessert und das Austreten von Schmiermittel über die Öffnung für das Rotorschaftende wird in vorteilhafter Weise vermindert.

Da die Stützkugel durch die ortsfeste Abstützfläche eine konstante Position innerhalb des Gehäuses und relativ zu der Dichtfläche einnimmt, kann weiterhin der Dichtspalt zwischen der Stützkugel und der Dichtfläche sehr eng ausgeführt werden, was ebenfalls zu einer verbesserten Dichtwirkung führt. Der Dichtspalt ist zudem durch die ortsfeste Anordnung von Stützkugel und Abstützfläche vollständig unabhängig von Toleranzen der radialen Rotorlagerung bzw. der Offenendspinnvorrichtung. Vorzugsweise ist der Dichtspalt zwischen der Dichtfläche und der Stützkugel mit einer Breite von weniger als 0,5 mm ausgeführt.

Vorzugsweise ist das Spurlagergehäuse aus einem Kunststoffmaterial ausgebildet. Die Ausführung des Spurlagergehäuses aus einem Kunststoffmaterial erlaubt es hierbei, in kostengünstiger Weise die Formgebung sowohl des Lagergehäuses selbst wie auch der innenliegenden Funktionsstrukturen, wie beispielsweise der Kugelführung, der Abstützfläche oder von Vorrichtungen zu Schmiermittelbevorratung und -zufuhr derart abzustimmen, dass die Schmierwirkung und zugleich die Abdichtung des Spurlagers optimiert wird. Zudem kann durch die Auswahl eines geeigneten Kunststoffmaterials mit guten Gleiteigenschaften die Menge an Schmiermittel in dem Spurlager erheblich reduziert werden, was weiterhin zur Vermeidung des Austretens von Schmiermittel beiträgt. Bedingt durch die geringere Schmiermittelmenge ist die Abdichtung des Spurlagergehäuses wesentlich erleichtert.

Besonders vorteilhaft ist es, wenn die Abstützfläche einteilig in dem Spurlagergehäuse angeformt ist. Die Abstützfläche ist hierdurch stets lagegenau innerhalb des Spurlagergehäuses positioniert und die Herstellung des Spurlagergehäuses sowie die Montage sind entsprechend vereinfacht. Besonders vorteilhaft ist es hierbei, wenn das Spurlagergehäuse als Kunststoffspritzgussstück ausgeführt ist, wobei die Abstützfläche innerhalb des Spurlagergehäuses einteilig angespritzt ist. Die Gestaltung aus Kunststoffspritzgussstück ermöglicht in besonders günstiger Weise auch kompliziertere Formgebungen, welche eine günstige Abstützung der Kugel ermöglichen oder den Schmiermittelvorrat sowie die Schmiermittelbenetzung der Stützkugel regulieren können.

Weiterhin ist es vorteilhaft, wenn der Innenraum des Spurlagergehäuses mit einem der Stützkugel zuzuführenden Schmiermittel gefüllt ist. Zur Schmierung kann eine Öl- oder Fettfüllung vorgesehen sein, wobei die Kugel direkt in dem Schmiermittelvorrat läuft. Ebenso kann der Innenraum jedoch lediglich einen Auffangraum für das Schmiermittel bilden, in welchem überschüssiges Schmiermittel aufgefangen wird und hierdurch am Austreten aus dem Spurlager gehindert wird. Eine Schmiermittelzufuhr kann in diesem Fall beispielsweise durch einen hinter der Abstützfläche angeordneten Schmiermittelvorrat erfolgen, welcher über Schmierkanäle der Abstützfläche bzw. der Stützkugel zugeführt wird. Die sich im Lager befindliche Schmiermittelmenge kann hierdurch reduziert werden, was ebenfalls zu einer verbesserten Dichtheit des Spurlagers führt. Durch die Ausführung des Spurlagers aus einem Kunststoffmaterial können derartige Kanäle leicht und vorzugsweise einteilig mit dem Gehäuse ausgeführt werden.

Eine andere vorteilhafte Ausführungsform der Erfindung sieht vor, dass die Abstützfläche mehrere, vorzugsweise schlitzartige Ausnehmungen aufweist, welche ein Schmiermittelreservoir bilden. Im Gegensatz zu bekannten Ausführungen, bei welchen die Stützkugel vollständig in einen fettgefüllten Schmiermittelreservoir läuft, ist durch die Ausnehmungen in der Abstützfläche, welche ein Schmiermittelreservoir bilden, eine sehr dosierte Schmiermittelbenetzung der Kontaktflächen zwischen Kugel und Schaftende des Spinnrotors möglich. Das Herausschleudern von Fett oder Öl aus dem Spurlagergehäuse kann hierdurch weiter reduziert werden.

Daneben ist es vorteilhaft, wenn die Ausnehmungen mit einer, bezogen auf die Axialrichtung des Spinnrotors, abstützflächenseitig angeordneten Befüllöffnung für ein Schmiermittel in Verbindung stehen. Die Ausnehmungen bilden bei dieser Ausführung Kanäle, welche einen Durchtritt des Schmiermittels von der Befüllöffnung bis an die Abstützfläche ermöglichen. Die Befüllöffnung kann im Betrieb in einfacher Weise durch ein entsprechendes Verschlusselement verschlossen werden und ermöglicht das einfache Nachbefüllen mit Schmiermittel ohne Demontage von Bauteilen und ohne Einstellarbeiten bezüglich der axialen Position des Spinnrotors wie im Stand der Technik.

Eine ebenfalls vorteilhafte Ausführungsform der Erfindung sieht vor, dass die Abstützfläche durch mehrere, vorzugsweise in Axialrichtung des Spinnrotors orientierte Segmente gebildet ist. Eine derartige Ausführung der Abstützfläche ist in günstiger Form einteilig mit dem Spurlagergehäuse aus einem Kunststoffmaterial herstellbar, wobei die zwischen den Segmenten sich ergebenden, in Axialrichtung orientierten Schlitze wiederum ein Schmiermittelreservoir bilden. Sind die Schlitze zwischen den Segmenten durchgehend ausgeführt, bilden diese wiederum Kanäle für den Schmiermitteldurchtritt von der Befüllöffnung her. Das Nachfüllen eines Schmiermittels kann somit in günstiger Weise von der der Rotorschaftöffnung abgewandten Seite aus erfolgen.

Um weiterhin die Abdichtung des Spurlagergehäuses nach Außen hin zu verbessern und somit den Schmiermittelaustritt zu vermindern, ist vorteilhafterweise die Öffnung für das Schaftende an ihrer zylindrischen Innenfläche mit einem Gewinde versehen. Durch die Gewindesteigung kann hierbei erreicht werden, dass das Schmiermittel durch die Drehung des Rotors nicht aus dem Spurlager abtransportiert wird. Darüber hinaus kann eventuell aus dem Aufnahmeraum ausgetretenes Schmiermittel in den Windungen des Gewindes aufgenommen werden und ein unkontrolliertes Herausschleudern aus dem Spurlager hierdurch verhindert werden.

Nach einer besonders vorteilhaften Ausführung der Erfindung weist das Spurlager eine gegenüberliegend der Abstützfläche in das Spurlagergehäuse eingesetzte Dichtbuchse auf. Diese enthält die Öffnung für das Schaftende und die wenigstens eine ringförmige Dichtfläche. Die Anordnung einer oder mehrerer Dichtflächen direkt an der Stützkugel lässt sich durch ein derartiges eingesetztes Bauteil in besonders einfacher Weise realisieren.

Nach einer anderen vorteilhaften Ausführung der Erfindung weist die Dichtbuchse eine konische Öffnung für das Schaftende auf. Das Rotorschaftende ist in diesem Fall ebenfalls konisch ausgeführt. Der radiale Spalt zwischen dem Schaftende des Spinnrotors sowie der Dichtbuchse kann hierdurch besonders klein ausgeführt werden und trägt somit ebenfalls zur Abdichtung des Spurlagergehäuses bei.

Zur Verbesserung der Abdichtung des Spurlagers im Bereich des Rotorschafts ist es weiterhin vorteilhaft, wenn die Dichtbuchse eine schleifende Schaftdichtung aus einem temperaturbeständigen Gleitlagerwerkstoff aufweist.

Ebenfalls vorteilhaft ist es, wenn die Abstützfläche des Spurlagers zumindest teilweise aus einem Gleitlagerwerkstoff oder einem Festschmierstoff besteht. Das Spurlager kann hierdurch trocken betrieben werden, so dass Probleme mit einem Fettaustritt und den entsprechenden Verschmutzungen und Funktionsbeeinträchtigungen der Offenendspinnvorrichtung vollständig vermieden werden. Beispielsweise kann die Abstützfläche aus einem Festschmierstoff bestehen oder einen beispielsweise stiftförmigen Einsatz aus einem Festschmierstoff beinhalten. Ebenso kann die Abstützfläche aus einem Gleitlagerwerkstoff an einem Einsatzstück für das Spurlagergehäuse angeordnet sein oder das Spurlagergehäuse mit einer einteilig angeformten Abstützfläche aus einem Gleitlagerkunststoff wie PA, PTFE oder POM hergestellt sein.

Nach einer anderen vorteilhaften Ausführung besteht die Abstützfläche aus einem abriebfesten und temperaturbeständigen Werkstoff und die Stützkugel aus einem Keramikmaterial. Hierdurch kann eine besonders verschleißarme Axiallagerung für einen Spinnrotor bereitgestellt werden. Die Abstützfläche kann hierbei als Einsatz in ein Spurlagergehäuse aus Kunststoffmaterial vorgesehen sein.

Weiterhin ist es vorteilhaft, wenn das Spurlager eine im Wesentlichen zylindrische Außenkontur aufweist. Bei einer Offenendspinnvorrichtung mit einem Lagerbock zur Lagerung des Spinnrotors ist nach einer vorteilhaften Ausführungsform vorgesehen, dass das Spurlager eine im Wesentlichen zylindrische Außenkontur aufweist und in axialer Richtung des Spinnrotors verschiebbar an den Lagerbock befestigt ist. Die Befestigung kann in an sich bekannter Weise durch eine Klemmbefestigung, beispielsweise mittels eines Klemmdeckels oder einer Klemmschraube erfolgen. Durch die axiale Verschiebbarkeit des Spurlagers wird hierbei die axiale Positionierung des Spinnrotors ermöglicht. Vorteilhaft bei dieser Ausführung ist es, dass hierdurch in einfacher Weise ein Wechsel zwischen dem beschriebenen Spurlager und einem Luftlager erfolgen kann. Es kann somit für beide Lagerarten derselbe Lagerbock eingesetzt werden.

Weitere Vorteile der Erfindung werden anhand der nachfolgend dargestellten Ausführungsbeispiele beschrieben. Es zeigen:
- **Fig. 1**: eine erfindungsgemäße Offenendspinnvorrichtung in einer schematischen Schnittdarstellung,
- **Fig. 2**: ein erfindungsgemäßes Spurlager einer Offenendendspinnvorrichtung in einer schematischen Schnittdarstellung,
- **Fig. 3**: ein Dichtbuchse eines Spurlagers in einer schematischen Schnittdarstellung,
- **Fig. 4**: ein erfindungsgemäßes Spurlager in einer alternativen Ausführung in einer schematischen Schnittdarstellung,
- **Fig. 5**: eine schematische Draufsicht auf eine Abstützfläche eines erfindungsgemäßen Spurlagers,
- **Fig. 6**: eine schematische Seitenansicht einer alternativen Ausführung einer Abstützfläche sowie
- **Fig. 7**: eine weitere alternative Ausführung eines erfindungsgemäßen Spurlagers.

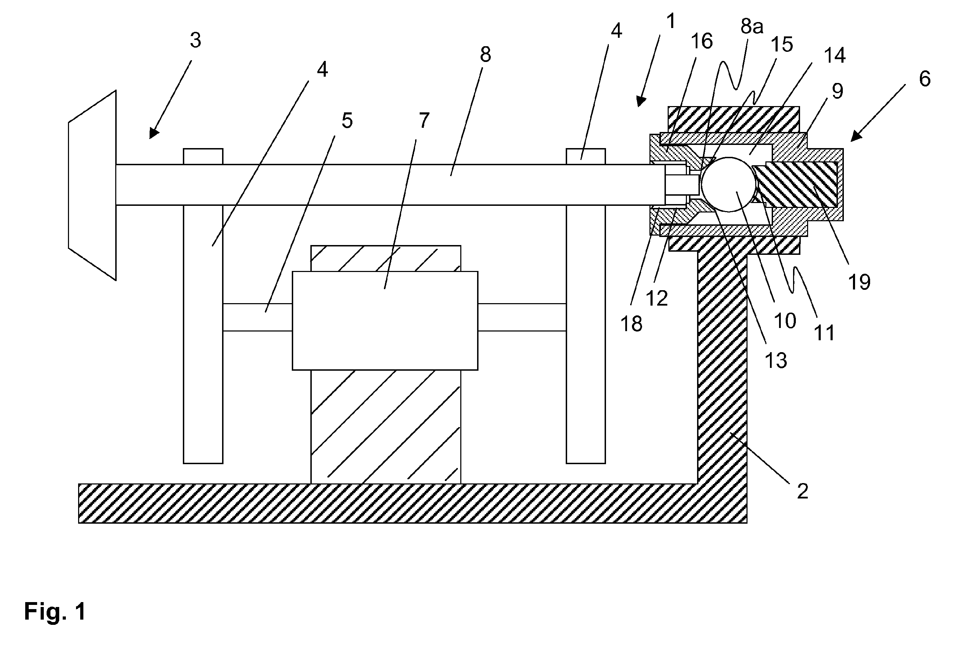

Figur 1 zeigt eine erfindungsgemäße Offenendspinnvorrichtung 1 mit einem Lagerbock 2 zur Lagerung eines Spinnrotors 3. Der Spinnrotor 3 ist in an sich bekannter Weise in einem Keilspalt von Stützscheiben 4 gelagert, wobei die Achsen 5 der Stützscheiben 4 (vorliegend ist aufgrund der schematisierten Darstellung nur ein Stützscheibenpaar zu erkennen) leicht schräg zueinander angeordnet sind. Hierdurch wird eine Axialkraft auf den Spinnrotor 3 erzeugt, zu deren Abstützung ein Spurlager 6 vorgesehen ist, welches an dem Lagerbock 2 befestigt ist. Hierdurch kann eine exakte axiale Positionierung des Spinnrotors 3 erreicht werden. Das Spurlager 6 zur axialen Abstützung des stirnseitigen Schaftendes 8a umfasst in an sich bekannter Weise ein Spurlagergehäuse 9, in dessen Innenraum 14 eine frei drehbare Stützkugel 10 angeordnet ist. Die Stützkugel 10 ist an einer Abstützfläche 11 des Spurlagergehäuses 9 abgestützt. Gegenüberliegend der Abstützfläche 11 weist das Spurlager 6 eine Öffnung 12 für das Ende des Rotorschaftes 8 auf.

Die Abstützfläche 11 ist fest in dem Spurlagergehäuse 9 integriert. Eine derartige ortsfeste Abstützfläche 11 ist in vorteilhafter Weise in einem Spurlagergehäuse 9 aus einem Kunststoffmaterial angeordnet. Das Spurlager 6 weist eine im Wesentliche zylindrische Außenkontur auf und ist in axialer Richtung verschiebbar an dem Lagerbock 2 befestigt, um hierdurch eine Einstellung der axialen Position des Spurlagers 6 und damit die Festlegung der axialen Position des Spinnrotors 3 durchzuführen. Durch die ortsfeste Anordnung der Abstützfläche 11 in dem Spurlagergehäuse 9 bleibt die Position der Abstützfläche 11 und der Stützkugel 10 innerhalb des Gehäuses 9 stets konstant, so dass Dichtspalte 13, welche den Innenraum 14 des Spurlagergehäuses 9 nach Außen hin abdichten, besonders schmal und exakt ausgeführt werden können.

Ist das Spurlager 6 ein mit Schmiermittel betriebenes Spurlager 6, so befindet sich eine Schmiermittelfüllung in dem Innenraum 14. Vorliegend ist zur Abdichtung des Spurlagers 6 eine Dichtbuchse 16 vorgesehen, welche gegenüberliegend der Abstützfläche 11 in axialer Richtung des Spinnrotors 3 in das Spurlagergehäuse 9 eingesetzt ist. Die Dichtbuchse 16 enthält die Öffnung 12 für das Rotorschaftende 8a und weist gemäß der vorliegenden Darstellung eine ringförmige Dichtfläche 15 auf. Während im Stand der Technik eine Abdichtung des Spurlagers 6 lediglich im Bereich des Rotorschaftes 8 erfolgte, ist nach der vorliegenden Erfindung vorgesehen, eine Abdichtung des Innenraums 14 des Gehäuses 9 direkt an der Stützkugel 10 vorzunehmen. Es befindet sich somit lediglich die Stützkugel 10 innerhalb des schmiermittelgefüllten Innenraums 14. Die Kontaktfläche zwischen dem Schaftende 8a des Spinnrotors 3 sowie der Stützkugel 10 befindet sich hingegen außerhalb des von der Dichtfläche 13 begrenzten Innenraums 14. Hierdurch ist in optimaler Weise eine Schmiermittelzufuhr an die Kontaktfläche möglich, wobei durch die Dichtfläche 13 verhindert wird, dass überschüssiges Öl oder Fett über die Öffnung 12 nach Außen gelangt. Es kann daher nur noch eine sehr reduzierte Menge an Schmiermittel bis in den Bereich der Öffnung 12 für den Spinnrotor 3 gelangen.

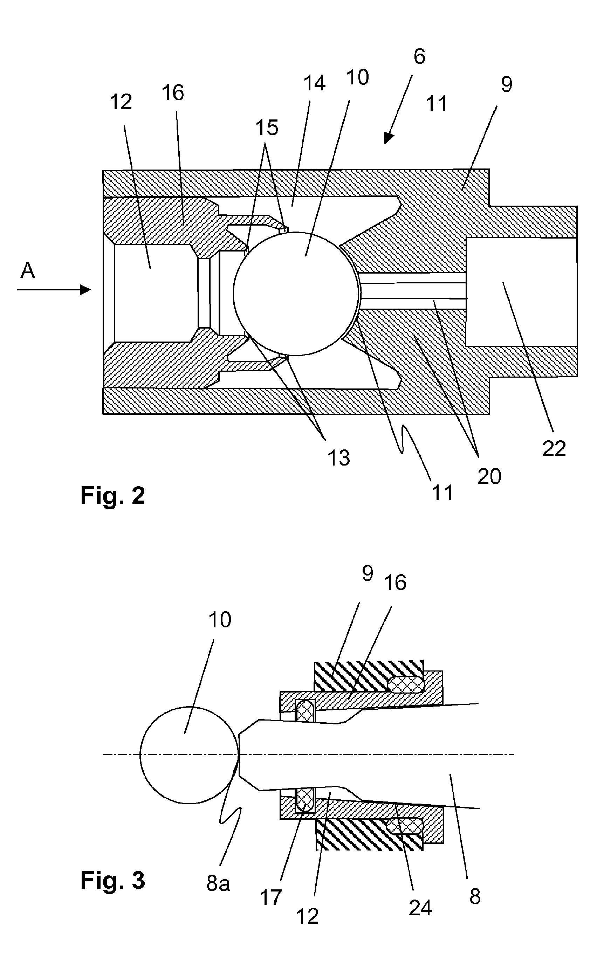

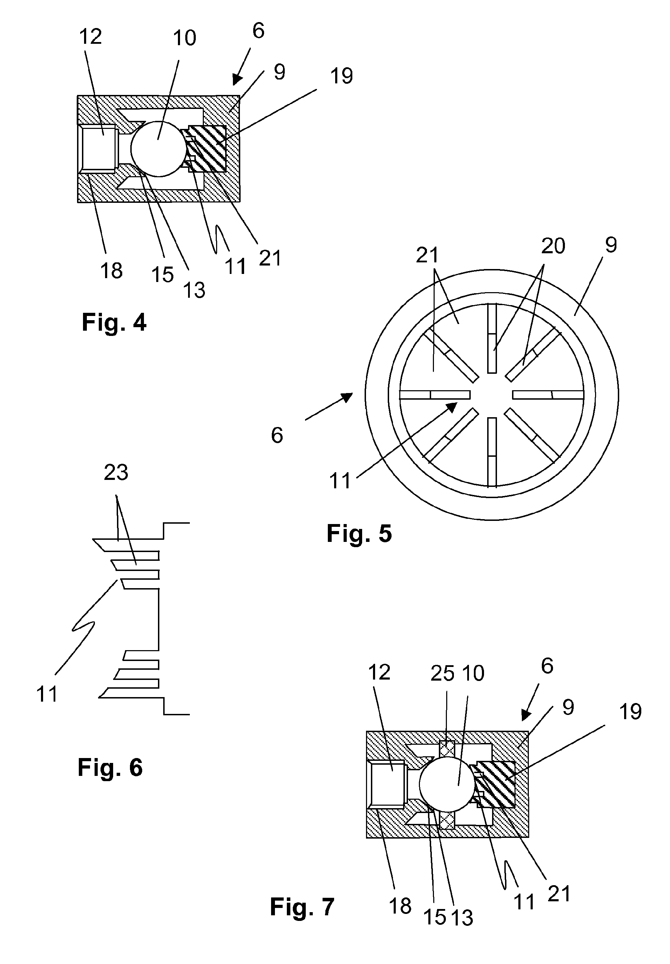

Um das Austreten von Schmiermittel über die Öffnung 12 weitgehend vollständig zu verhindern, kann zusätzlich noch im Bereich der Öffnung 12 in an sich bekannter Weise eine Rotorschaftdichtung 17 vorgesehen sein, wie beispielsweise in Figur 3 gezeigt. Als weitere Abdichtungsmaßnahme des Spurlagers 6 nach Außen hin kann, wie in den Figuren 1 und 4 ersichtlich, die Öffnung 12 für den Rotorschaft 8 an ihrer zylindrischen Innenfläche mit einem Gewinde 18 versehen sein. Die Gewindeflanken verhindern hierbei durch ihre Schraubwirkung, dass Schmiermittel über die Öffnung 12 aus dem Spurlager 6 nach Außen transportiert wird. Dennoch austretende kleine Schmierstoffmengen gelangen lediglich in die Windungen des Gewindes 18, welche eine Art Stauraum für das Schmiermittel bilden und dieses somit am weiteren Austreten aus dem Spurlager 6 hindern.

Nach Darstellung der Figur 1 ist die Abstützfläche 11 nicht direkt an das Spurlagergehäuse 9 angeformt, sondern als Einsatzstück 19 in dieses eingesetzt. Die Ausführung des Spurlagergehäuses aus einem Kunststoffmaterial erlaubt es jedoch bedingt durch die große Freiheit hinsichtlich der Formgebung, die Abstützfläche 11 auch direkt in das Spurlagergehäuse 9 anzuformen, wie bei dem Spurlager 6 der Figur 2 dargestellt.

Demgegenüber ermöglicht die Ausführung der Abstützfläche 11 an einem Einsatzstück 19, die Abstützfläche 11 aus einem anderen Material auszubilden und hierdurch, beispielsweise, besonders verschleißfest auszuführen. So kann das Spurlagergehäuse 9 in kostengünstiger Weise aus einem Kunststoffmaterial hergestellt werden, während die Abstützfläche 11 bzw. das Einsatzstück 19 beispielsweise aus einem Gleitlagerwerkstoff besteht. Weiterhin ist es auch möglich, die Abstützfläche 11 aus einem Festschmierstoff herzustellen oder aber einen Einsatz aus einem Festschmierstoff innerhalb der Abstützfläche 11 vorzusehen. Besonders vorteilhaft ist es hierbei, dass dann keinerlei Schmiermittel in dem Innenraum 14 des Spurlagergehäuses 9 mehr angeordnet werden muss, sondern das Lager 6 im Trockenlauf betrieben werden kann. Ebenso kann anstelle eines Festschmierstoffs auch ein sehr abriebfester und temperaturbeständiger Gleitlagerwerkstoff für die Ausführung der Abstützfläche 11 vorgesehen sein, welcher den Betrieb des Spurlagers 6 im Trockenlauf ermöglicht.

Wie weiterhin der Figur 1 entnehmbar, ist die Abstützfläche 11 vorliegend in Form einer geschlossenen Kalotte ausgeführt. Es sind jedoch auch zahlreiche andere Ausführungen mit segmentierten Abstützflächen 11 oder durch Kugeln oder Stifte gebildeten Abstützflächen 11 möglich, wie die folgenden Ausführungsbeispiele zeigen.

Figur 2 zeigt ein erfindungsgemäßes Spurlager 6 in einer schematischen Schnittdarstellung, welches eine einteilig in dem Spurlagergehäuse 9 angeformte Abstützfläche 11 beinhaltet. Ein derartiges Spurlagergehäuse 9 mit integrierter Abstützfläche 11 kann günstig als Kunststoffspritzgussstück hergestellt werden, da dies große Freiheiten bei der Formgebung sowie eine wirtschaftliche Fertigung in hohen Stückzahlen ermöglicht. Die Abstützfläche 11 ist vorliegend nicht durch eine geschlossene Kalotte gebildet, sondern durch mehrere Segmente 20, wie in Figur 5 dargestellt, welche eine schematisierte Draufsicht in Pfeilrichtung A zeigt. Vorliegend sind mehrere, in axialer Richtung des Spinnrotors 3 orientierte, scheibenförmige Segmente 20 vorgesehen, welche direkt an das Gehäuse 9 des Spurlagers 6 angeformt sind und die Abstützfläche 11 bilden.

Zwischen den einzelnen Segmenten 20 ergeben sich mehrere schlitzartige Ausnehmungen 21, welche ein Schmiermittelreservoir bilden. Je nach Größe der Ausnehmungen 21 ist es nicht unbedingt erforderlich, auch den Innenraum 14 mit Schmiermittel zu füllen. Dieser bildet somit lediglich einen Auffangraum für überschüssiges Schmiermittel. Der Schmierstoffvorrat befindet sich somit auf der der Kontaktfläche zum Schaftende 8a abgewandten Seite des Spurlagers 6, wodurch ebenfalls eine dosierte Schmierstoffzufuhr an die Stützkugel 10 ermöglicht wird. Durch die ortsfeste Positionierung der Abstützfläche 11 und der Stützkugel 10 sowie die Begrenzung der Schmiermittelreservoire bzw. Ausnehmungen 21 durch die Segmente 20 kann wiederum eine übermäßige Fettzufuhr an die Stützkugel 10 und ein übermäßiger Fettaustritt aus den Schmiermittelreservoiren in den Innenraum 14 vermieden werden. Ebenso können jedoch der Innenraum 14 und die Ausnehmungen 21 mit einem Schmiermittel befüllt sein. Zum Befüllen des Innenraums 14 und/oder der Schmiermittelreservoire bzw. Ausnehmungen 21 ist abstützflächenseitig der Stützkugel 10 eine Befüllöffnung 22 vorgesehen. Das Befüllen des Spurlagers 6 kann somit in günstiger Weise von der Seite der Abstützfläche 11 aus erfolgen, so dass keinerlei Demontage- oder Einstellarbeiten hierzu erforderlich sind.

Die ortsfeste Anordnung der Abstützfläche 11 in dem Spurlagergehäuse 9 erlaubt es weiterhin, wie bereits unter Figur 1 beschieben, eine besonders effiziente Abdichtung des Innenraums 14 bereits im Bereich der Stützkugel 10 vorzunehmen. Vorliegend ist zur Abdichtung eine Dichtbuchse 16 mit zwei ringförmigen Dichtflächen 15 direkt an der Stützkugel 10 vorgesehen. In Kombination mit der segmentierten Abstützfläche 11 sowie den Ausnehmungen 21 kann in vorteilhafter Weise erreicht werden, dass sich nur eine geringe Menge an Schmiermittel in dem Innenraum 14 des Spurlagers 6 befindet. Eine kontrollierte und ausreichende Schmierstoffzufuhr ist durch die Ausnehmungen 21 sowie gegebenenfalls durch ein Nachbefüllen über die Befüllöffnung 22 jederzeit gegeben, wobei durch die mehrfache Anordnung von Dichtflächen 15 bereits im Bereich der Stützkugel 10 ein Austritt aus dem Innenraum 14 weitgehend verhindert wird. Die Breite der Dichtspalte 13 kann hierdurch konstant in einem sehr kleinen Bereich zwischen 0,1 und 0,5 mm gehalten werden. Eine derartige Breite hat sich als optimal erwiesen, um einerseits eine zuverlässige Abdichtung des Innenraums 14 zu gewährleisten und andererseits eine kontrollierte Benetzung der Stützkugel 10 zu ermöglichen.

Außer den in den Figuren 1 und 5 gezeigten Abstützflächen sind weitere vielfältige Abwandlungen der Abstützfläche 11 möglich. Die Abstützfläche 11 kann hierbei jeweils sowohl einteilig mit dem Spurlagergehäuse 9 als auch an einem Einsatzstück 19 angeordnet sein.

Figur 4 zeigt beispielsweise ein Einsatzstück 19 mit einer kalottenförmigen Abstützfläche 11, welche jedoch durch Ausnehmungen 21 unterbrochen ist, die Fetttaschen zur Schmiermittelbevorratung und dosierten Schmiermittelabgabe bilden. Durch die Ausführung des Spurlagergehäuses 9 aus einem Kunststoffmaterial können die Dichtflächen 15 weiterhin auch, wie vorliegend gezeigt, direkt in das Spurlagergehäuse 9 eingeformt werden.

Figur 6 zeigt wiederum eine andere Ausführung einer Abstützfläche 11 in einer schematisierten Detailansicht, welche durch mehrere Stifte 23 gebildet ist. Die Zwischenräume zwischen den Stiften 23 können auch hier wiederum als Schmiermittelreservoire dienen. Eine derartige Abstützfläche 11 ist ebenfalls in vorteilhafter Weise in einteiliger Ausführung mit dem Spurlagergehäuse 9 herstellbar. Weiterhin ist es auch hier möglich, einen Kanal zwischen der Abstützfläche 11 sowie einer Befüllöffnung 22 vorzusehen, über welchen dann eine Befüllung des Spurlagers 6 von der dem Rotor 3 abgewandten Seite des Spurlager 6 aus möglich ist.

Bei der Gestaltung der Abstützfläche 11 sind zahlreiche weitere, nicht dargestellte Abwandlungen möglich. So können Fetttaschen oder Schmiermitteldepots auch durch eine oder mehrere radial verlaufende Nuten gebildet sein. Die Abstützfläche kann neben den gezeigten Stiften 23 oder Segmenten 22 auch durch eine Vielzahl anderer Formelemente, wie beispielsweise konzentrische Rippen oder noppenartige Hervorhebungen, gebildet sein.

Figur 3 zeigt eine schematische Detaildarstellung einer Dichtbuchse 16, welche in ein erfindungsgemäßes Spurlager 6 einsetzbar ist. Im Gegensatz zu den vorbeschriebenen Dichtbuchsen 16 weist diese eine konische Öffnung 12 für den Rotorschaft 8 auf, welcher in diesem Fall ebenfalls eine konische Form aufweist. Ein radialer Spalt 24 zwischen dem Rotorschaft 8 und der Dichtbuchse 16 kann hierdurch minimiert werden, was weiterhin zur Abdichtung des Spurlagers 6 nach Außen beiträgt. Zusätzlich kann in an sich bekannter Weise eine Schaftdichtung 17 vorgesehen sein.

Figur 7 zeigt schließlich noch eine weitere Variante eines Spurlagers 6, welches im Bereich der Mitte der Stützkugel 10 eine vertikale Trennwand 25 beinhaltet. Diese unterteilt den Innenraum 14 des Spurlagergehäuses 9 und reguliert hierdurch die Schmiermittelbevorratung und -zufuhr. Zugleich kann die Trennwand der Führung der Stützkugel 11 dienen. Vorzugsweise ist die Trennwand 25 hierzu aus einem temperaturbeständigen Gleitlagerwerkstoff ausgeführt.

Mit dem erfindungsgemäßen Spurlager 6 sowie der erfindungsgemäßen Offenendspinnvorrichtung 1 ist eine sehr effiziente und saubere Abdichtung des Spurlagers 6 möglich, welche das Austreten von Schmiermittel weitgehend verhindert. Hierdurch können Verunreinigungen und in der Folge Funktionsbeeinträchtigungen durch den in Spinnereien stets vorhandenen Faserflug vermieden werden und die Sauberhaltung und Wartung der Spinnmaschine vereinfacht werden.

### Bezugszeichenliste

- 1: Offenendspinnvorrichtung
- 2: Lagerbock
- 3: Spinnrotor
- 4: Stützscheibe
- 5: Achse
- 6: Spurlager
- 7: Stützscheibenlager
- 8: Schaft des Spinnrotors
- 8a: stirnseitiges Schaftende
- 9: Spurlagergehäuse
- 10: Stützkugel
- 11: Abstützfläche
- 12: Öffnung
- 13: Dichtspalt
- 14: Innenraum
- 15: Dichtfläche
- 16: Dichtbuchse
- 17: Schaftdichtung
- 18: Gewinde
- 19: Einsatzstück
- 20: Segment
- 21: Ausnehmung
- 22: Befüllöffnung
- 23: Stift
- 24: Radialer Spalt
- 25: Trennwand

## Patentansprüche

1. Spurlager (6) für einen axial belasteten Schaft (8) eines Spinnrotors (3) mit einem Spurlagergehäuse (9), in dessen Innenraum (14) eine gegen eine Abstützfläche (11) anliegende, frei drehbare Stützkugel (10) zur Abstützung eines stirnseitigen Schaftendes (8a) des Spinnrotors (3) angeordnet ist, sowie mit einer der Abstützfläche (11) gegenüberliegend angeordneten Öffnung (12) für das Schaftende (8a), **dadurch gekennzeichnet, dass** die Abstützfläche (11) ortsfest in dem Spurlagergehäuse (9) angeordnet ist und das Spurlager (6) wenigstens eine ringförmige Dichtfläche (15) im Bereich der Stützkugel (10) aufweist, welche den Innenraum (14) direkt an der Stützkugel (10) gegen die Öffnung (12) für das Schaftende (8a) abdichtet.

2. Spurlager nach dem vorhergehenden Anspruch, **dadurch gekennzeichnet, dass** das Spurlagergehäuse (9) aus einem Kunststoffmaterial besteht, insbesondere ein Kunststoffspritzgussstück ist, und dass die Abstützfläche (11) einteilig in dem Spurlagergehäuse (9) angeformt ist.

3. Spurlager nach einem der vorhergehenden Ansprüche, **dadurch gekennzeichnet, dass** der Innenraum (14) des Spurlagergehäuses (9) mit einem der Stützkugel (10) zuzuführenden Schmiermittel gefüllt ist und/oder einen Auffangraum für Schmiermittel bildet.

4. Spurlager nach einem der vorhergehenden Ansprüche, **dadurch gekennzeichnet, dass** ein Dichtspalt (13) zwischen der Stützkugel (10) und der wenigstens einen Dichtfläche (15) eine Breite von weniger als 0,5 mm aufweist.

5. Spurlager nach einem der vorhergehenden Ansprüche, **dadurch gekennzeichnet, dass** die Abstützfläche (11) mehrere, vorzugsweise schlitzartige, Ausnehmungen (21) aufweist, welche ein Schmiermittelreservoir bilden, oder durch mehrere, vorzugsweise in Axialrichtung des Spinnrotors (3) orientierte, Segmente (20) gebildet ist.

6. Spurlager nach einem der vorhergehenden Ansprüche, **dadurch gekennzeichnet, dass** die Ausnehmungen (21) mit einer bezogen auf die Axialrichtung des Spinnrotors (3) abstützflächenseitig angeordneten Befüllöffnung (22) für ein Schmiermittel in Verbindung stehen.

7. Spurlager nach einem der vorhergehenden Ansprüche, **dadurch gekennzeichnet, dass** die Öffnung (12) für das Schaftende (8a) an ihrer zylindrischen Innenfläche mit einem Gewinde (18) versehen ist.

8. Spurlager nach einem der vorhergehenden Ansprüche, **dadurch gekennzeichnet, dass** gegenüberliegend der Abstützfläche (11) eine Dichtbuchse (16) in das Spurlagergehäuse (9) eingesetzt ist, welche die Öffnung (12) für das Schaftende (8a), vorzugsweise eine konische Öffnung (12), und die wenigstens eine Dichtfläche (15) enthält.

9. Spurlager nach einem der vorhergehenden Ansprüche, **dadurch gekennzeichnet, dass** die Dichtbuchse (16) eine schleifende Schaftdichtung (17) aus einem temperaturbeständigen Gleitlagerwerkstoff aufweist.

10. Spurlager nach einem der vorhergehenden Ansprüche, **dadurch gekennzeichnet, dass** das Spurlager (6) eine im Wesentlichen zylindrische Außenkontur aufweist.

11. Spurlager nach einem der vorhergehenden Ansprüche, **dadurch gekennzeichnet, dass** die Abstützfläche (11) des Spurlagers (6) zumindest teilweise aus einem Gleitlagerwerkstoff oder einem Festschmierstoff besteht.

12. Spurlager nach einem der vorhergehenden Ansprüche, **dadurch gekennzeichnet, dass** die Abstützfläche (11) aus einem abriebfesten und temperaturbeständigen Werkstoff und die Stützkugel (10) aus einem Keramikmaterial besteht.

13. Spurlager nach einem der vorhergehenden Ansprüche, **dadurch gekennzeichnet, dass** das Spurlager (6) im Bereich der Mitte der Stützkugel (10) eine vertikale Trennwand (25) enthält, welche den Innenraum (14) unterteilt und eine Führung für die Stützkugel (10) bildet.

14. Offenendspinnvorrichtung (1) mit einem Lagerbock (2) zur Lagerung eines Spinnrotors (3) und mit einem Spurlager (6), an welchem ein Schaftende (8a) des Spinnrotors (3) axial abgestützt ist und welches an dem Lagerbock (2) befestigt ist, **dadurch gekennzeichnet, dass** das Spurlager (6) nach einem der Ansprüche 1 - 13 ausgebildet ist.

15. Offenendspinnvorrichtung nach dem vorhergehenden Anspruch, **dadurch gekennzeichnet, dass** das Spurlager (6) eine im Wesentlichen zylindrische Außenkontur aufweist und in axialer Richtung des Spinnrotors (3) verschiebbar an dem Lagerbock (2) befestigt ist.
